# EUROPEAN PATENT APPLICATION

(11) **EP 4 786 914 A1**
(43) Date of publication of application: **05.08.2026**
(21) Application number: 25155736.9
(22) Date of filing: 04.02.2025
(51) Int. Cl.: G01B 5/008, G05B 19/19, G05B 19/401, G05B 19/4097

(54) **METHOD OF SCANNING A MEASUREMENT SPACE OF A SHAPE MEASUREMENT SYSTEM, COMPUTER-READABLE PROGRAM AND SHAPE MEASUREMENT SYSTEM**

(71) Applicant: Mitutoyo Corporation, Kawasaki, Kanagawa 213-8533 (JP); Mitutoyo Europe GmbH, 41469 Neuss (DE)
(72) Inventor: Ade, Günther, Oberndorf am Neckar (DE)
(74) Representative: Müller-Boré & Partner Patentanwälte PartG mbB

(57) **Abstract**

The application relates to a method for generating a shape measurement program for measuring the shape of a workpiece, the method comprising the steps: scanning a measurement space of a shape measurement system with a movable and/or mobile scanning device comprising an imaging device to obtain scanning data; recognizing at least one workpiece in the measurement space by analyzing the scanning data; detecting a position and/or orientation of the at least one workpiece in the measurement space; and generating a shape measurement program including a collision free movement path for a measuring probe of the shape measurement system for measuring the shape of the at least one workpiece. Furthermore, the application relates to a method for conditioning a shape measurement of a workpiece, a method for defining a dimensional measurement equipment, DME, configuration of a shape measurement system, a method generating a shape measurement program for measuring the shape of a workpiece, to a corresponding computer program product and to a corresponding shape measurement system.

## Description

The present disclosure relates to a method generating a shape measurement program for measuring the shape of a workpiece, a method for conditioning a shape measurement of a workpiece, a method for defining a dimensional measurement equipment configuration of a shape measurement system, a respective computer-readable program and a shape measurement system configured to carry out said methods.

Measuring accuracy of produced workpieces may be achieved by contact measurements in which a probe contacts specific points on the surface of a workpiece. It may be measured if the produced workpiece is within predetermined (or predeterminable) tolerances to ensure proper functioning and/or fit of the work piece, in particular in assemblies.

However, the preparation for the measurements is complicated and time consuming.

In particular, identifying and defining the measurement equipment configuration as well as positioning the workpiece with the required accuracy in the predetermined (or predeterminable) place requires experience and detailed knowledge.

Since experienced workers for preparing and performing shape measurements are rare, there is a need for providing assistance for less experienced users and/or for accelerating the preparation and measurement procedure.

It is therefore an object of the present invention to provide a method and system for providing assistance and/or accelerating a shape measurement of a workpiece.

### Summary of the Invention

This object is solved according to the invention by the features of the independent claims. Additional embodiments of the invention are subject of the dependent claims.

One aspect relates to a method for generating a shape measurement program for measuring the shape of a workpiece, the method comprising the steps: scanning a measurement space of a shape measurement system with a movable and/or mobile scanning device comprising an imaging device, such as a camera, to obtain scanning data; recognizing at least one workpiece in the measurement space by analyzing the scanning data; detecting a position and/or orientation of the at least one workpiece in the measurement space; and generating a shape measurement program including a collision free movement path for a measuring probe of the shape measurement system for measuring the shape of the at least one workpiece.

The method allows an improved generation of a shape measurement program. In particular, the method advantageously determines whether the correct workpiece is present in the measurement space of a shape measurement system in order to avoid complications and/or errors caused thereby. Also, the method may reduce time and effort for positioning and/or orientating the workpiece according to a predeterminable or predetermined position and/or orientation, since the actual and/or recognized position and/or orientation is considered in generating the shape measurement program.

A scanning of the measurement space using a mobile and/or movable scanning device provides the advantage of a cheap and easy to use solution.

Also, there particularly is no need for calibration, in particular compared to a stationary imaging device, such as a stationary camera. With a stationary camera, the workpiece would need to be rotated so that the stationary camera may capture all sides of the workpiece. Alternatively, a plurality of stationary cameras would be required, which significantly increases costs.

Furthermore, existing shape measurement systems may easily be upgraded by providing a respective scanning device, e.g. by providing an app on a mobile device such as a smartphone and suitably connecting the mobile device with the existing shape measurement systems. Also, a single mobile scanning device may be used for different shape measurement systems.

The scanning device may for example be or comprise a smartphone or a tablet or another device comprising an imaging device (such as a video camera) and configured to provide a video stream.

The scanning device may be or comprise a 3D imaging device (such as a 3D camera) and/or comprise an infrared sensor for measuring a distance to objects in the measurement space.

The scanning device may further comprise sensors for determination of the orientation of the scanning device such as a gyroscope, an accelerometer and/or a magnetometer. One or more of said sensors may increase the accuracy of orientation and/or positioning determination of the scanning device and, consequently, of objects in the measurement space.

The scanning data may in particular comprise a video stream and/or video feed and/or video recording and/or one or more pictures captured by the scanning device.

The shape measurement of the workpiece may involve moving or displacing a measuring probe of the shape measurement system to contact a plurality of contact points of the workpiece and capturing the position of said contact points in the measurement space. The generated shape measurement program comprises respective instructions.

The method may further comprise the step of outputting and/or at least temporarily storing, e.g., on a non-volatile storage medium, the generated shape measurement program, in particular for being accessed by a shape measurement system for shape measurement of a workpiece.

Recognizing at least one workpiece in the measurement space may include comparing at least part of the workpiece and/or a property thereof of at least a part of the workpiece identified in the measurement space with a loaded, e.g., CAD, model of the workpiece and/or known workpieces in a workpiece library. Alternatively or in addition, it may include identifying a code, such as a barcode or a QR code, provided on or at the workpiece.

The method may further comprise the steps: identifying a dimensional measurement equipment, DME, configuration; and if the detected DME configuration does not correspond to a predetermined (or predeterminable) DME configuration, prohibiting generating the shape measurement program for measuring the shape of the at least one workpiece. This advantageously determines whether the predetermined (or predeterminable) and/or required DME configuration is present in order to assist the user.

Measurement equipment may be devices and/or elements which may be positioned in the measurement space and/or which may be captured by the scanning device during scanning of the measurement space apart from the workpiece(s). The measurement equipment may be directly involved in the shape measurement, as e.g. the measuring probe, and/or support the shape measurement, e.g. by providing reference points for the scanning and/or providing support to the workpiece.

In particular, measurement equipment may be the measuring probe or parts thereof such as probe tip and probe head, the table and/or the probe moving mechanism of the shape measurement system. Measurement equipment may also be or comprise an optical marker (e.g., serving as reference point(s) of the measurement space), attachment means and/or support means such as a screw, a pin, a mounting hole (e.g., in the table), a port, a knuckle, an extension, a rotary table, a rack, a holder and/or a fixture, e.g. for supporting the workpiece and/or mounting the workpiece to the table of the shape measurement system.

Recognizing the measurement equipment may e.g. by achieved by identifying a code, such as a barcode or a QR code, provided on the measurement equipment. Alternatively or in addition, the measurement equipment may be recognized by visual comparison with stored pictures and/or models of at least a part of the measurement equipment. This advantageously allows automatic and/or assisted recognition of the DME.

The method may further comprise the step of: adding collision avoidance zones automatically and/or manually for an improved collision free movement path of the measuring probe.

Another aspect relates to a method for conditioning and/or setting up and/or preparing and executing a shape measurement of a workpiece, the method comprising the steps: positioning a workpiece in a measurement space of a shape measurement system; selecting a shape measurement program for measuring the shape of the workpiece; scanning the measurement space of the shape measurement system with a movable and/or mobile scanning device comprising an imaging device, such as a camera, to obtain scanning data; detecting a position and/or orientation of the workpiece in the measurement space by analyzing the scanning data; determining whether the position and/or orientation of the workpiece is correct; and performing a shape measurement of the workpiece if the detected position and/or orientation of the workpiece is correct; or providing feedback and/or prohibiting performing a shape measurement of the workpiece if the detected position and/or orientation of the workpiece is not correct.

A respective method may advantageously provide assistance in correctly positioning and/or orientating the workpiece in the measurement space of the shape measurement system. This may reduce errors and/or complications caused by an incorrect position and/or orientation of the workpiece.

Providing feedback if the detected position and/or orientation of the workpiece is not correct may include providing one or more instructions on how the workpiece is to be moved in the measurement space to obtain the correct position and/or orientation. Said instructions may be provided and/or output to a user for example visually, e.g. as animation of the measurement space and/or as written and/or acoustic teaching.

When determining whether the position and/or orientation of the workpiece is correct, a predetermined and/or predeterminable tolerance may be considered acceptable. In other words, even if the position and/or orientation of the workpiece deviates from the predefined position and/or orientation by a margin within the tolerance, the position and/or orientation may still be determined as correct. For example, the tolerance may be between approximately 0.1 % and approximately 5 %, for example approximately 1 %, of the length and/or height of the workpiece and/or between approximately 0.1 mm and approximately 1 cm, for example approximately 1 mm.

The method may further comprise the steps: identifying a dimensional measurement equipment, DME, configuration; and prohibiting performing a shape measurement of the workpiece if the detected DME configuration does not correspond to a predetermined (or predeterminable) DME configuration. As described above, this may advantageously determine whether the predetermined (or predeterminable) and/or required DME configuration is provided in order to assist the user.

Performing a shape measurement of the workpiece if the detected position and/or orientation of the workpiece is correct may include executing a shape measurement program generated using the method according to another aspect herein.

The method for generating a shape measurement program for measuring the shape of a workpiece and/or the method for conditioning and/or setting up and/or preparing and executing a shape measurement of a workpiece may further comprising the step(s): loading a, e.g. CAD, model of the workpiece; and/or loading a predetermined (or predeterminable) dimensional measurement equipment, DME, configuration of the shape measurement system.

Another aspect relates to a method for defining a dimensional measurement equipment, DME, configuration of a shape measurement system, the method comprising the steps: scanning a measurement space of a shape measurement system with a movable and/or mobile scanning device comprising an imaging device, such as a camera, to obtain scanning data; recognizing a measurement equipment in the measurement space by analyzing the scanning data; and adding the recognized measurement equipment to the DME configuration. The method advantageously provides assistance to a user for defining and/or checking the DME configuration.

Recognizing the measurement equipment may e.g. by achieved by identifying a code, such as a barcode or a QR code, provided on the measurement equipment. Alternatively or in addition, the measurement equipment may be recognized by visual comparison with stored pictures and/or models of at least a part of the measurement equipment. This particularly allows automatic and/or assisted recognition of the DME.

Recognizing a measurement equipment in the measurement space may include comparing a measurement equipment detected in the measurement space with known measurement equipment in a measurement equipment library.

The method may further comprise the step of: adding identified and unknown measurement equipment to the measurement equipment library. In particular unknown measurement equipment may be specified so that it may be recognized in future DME definitions.

The method for defining a DME configuration may also be comprised by a method for generating a shape measurement program for measuring the shape of a workpiece according to one aspect herein and/or a method for conditioning a shape measurement of a workpiece according to another aspect herein.

Another aspect relates to a method for generating a shape measurement program for measuring the shape of a workpiece, the method comprising the steps: scanning a measurement space of a shape measurement system with a movable and/or mobile scanning device comprising an imaging device, such as a camera, to obtain scanning data; recognizing at least one workpiece in the measurement space by analyzing the scanning data; detecting a position and/or orientation of the at least one workpiece in the measurement space; recognizing a measurement equipment in the measurement space by analyzing the scanning data; adding the recognized measurement equipment to the DME configuration; and generating a shape measurement program including a collision free movement path for a measuring probe of the shape measurement system for measuring the shape of the workpiece, in particular by considering the recognized workpiece and its detected position and/or orientation and the DME configuration.

Another aspect relates to a computer-readable program comprising one or more instructions which, when loaded and executed on a suitable system, cause the system to carry out the steps of the method for generating a shape measurement program for measuring the shape of a workpiece, the method comprising the steps: scanning a measurement space of a shape measurement system with a movable and/or mobile scanning device comprising an imaging device, such as a camera, to obtain scanning data; recognizing at least one workpiece in the measurement space by analyzing the scanning data; detecting a position and/or orientation of the at least one workpiece in the measurement space; and generating a shape measurement program including a collision free movement path for a measuring probe of the shape measurement system for measuring the shape of the at least one workpiece according to an aspect herein.

Another aspect relates to a computer-readable program comprising one or more instructions which, when loaded and executed on a suitable system, cause the system to carry out the steps of the method for conditioning and/or setting up and/or preparing and executing a shape measurement of a workpiece, the method comprising the steps: positioning a workpiece in a measurement space of a shape measurement system; selecting a shape measurement program for measuring the shape of the workpiece; scanning the measurement space of the shape measurement system with a movable and/or mobile scanning device comprising an imaging device, such as a camera, to obtain scanning data; detecting a position and/or orientation of the workpiece in the measurement space by analyzing the scanning data; determining whether the position and/or orientation of the workpiece is correct; and performing a shape measurement of the workpiece if the detected position and/or orientation of the workpiece is correct; or providing feedback and/or prohibiting performing a shape measurement of the workpiece if the detected position and/or orientation of the workpiece is not correct according to an aspect herein

Another aspect relates to a computer-readable program comprising one or more instructions which, when loaded and executed on a suitable system, cause the system to carry out the steps of the method for conditioning and/or setting up and/or preparing and executing a shape measurement of a workpiece, the method comprising the steps: positioning a workpiece in a measurement space of a shape measurement system; selecting a shape measurement program for measuring the shape of the workpiece; scanning the measurement space of the shape measurement system with a movable and/or mobile scanning device comprising an imaging device, such as a camera, to obtain scanning data; detecting a position and/or orientation of the workpiece in the measurement space by analyzing the scanning data; determining whether the position and/or orientation of the workpiece is correct; and performing a shape measurement of the workpiece if the detected position and/or orientation of the workpiece is correct; or providing feedback and/or prohibiting performing a shape measurement of the workpiece if the detected position and/or orientation of the workpiece is not correct according to an aspect herein.

A further aspect relates to a shape measurement system comprising a host computer configured to carry out the method for generating a shape measurement program for measuring the shape of a workpiece, the method comprising the steps: scanning a measurement space of a shape measurement system with a movable and/or mobile scanning device comprising an imaging device, such as a camera, to obtain scanning data; recognizing at least one workpiece in the measurement space by analyzing the scanning data; detecting a position and/or orientation of the at least one workpiece in the measurement space; and generating a shape measurement program including a collision free movement path for a measuring probe of the shape measurement system for measuring the shape of the at least one workpiece according to an aspect herein.

A further aspect relates to a shape measurement system comprising a host computer configured to carry out the method for conditioning and/or setting up and/or preparing and executing a shape measurement of a workpiece, the method comprising the steps: positioning a workpiece in a measurement space of a shape measurement system; selecting a shape measurement program for measuring the shape of the workpiece; scanning the measurement space of the shape measurement system with a movable and/or mobile scanning device comprising an imaging device, such as a camera, to obtain scanning data; detecting a position and/or orientation of the workpiece in the measurement space by analyzing the scanning data; determining whether the position and/or orientation of the workpiece is correct; and performing a shape measurement of the workpiece if the detected position and/or orientation of the workpiece is correct; or providing feedback and/or prohibiting performing a shape measurement of the workpiece if the detected position and/or orientation of the workpiece is not correct according to an aspect herein.

A further aspect relates to a shape measurement system comprising a host computer configured to carry out the method for defining a dimensional measurement equipment, DME, configuration of a shape measurement system, the method comprising the steps: scanning a measurement space of a shape measurement system with a movable and/or mobile scanning device comprising an imaging device, such as a camera, to obtain scanning data; recognizing a measurement equipment in the measurement space by analyzing the scanning data; and adding the recognized measurement equipment to the DME configuration according to an aspect herein.

One or more of the shape measurement systems may further comprise one or more of: a table for mounting a workpiece to be measured; a scanning device for scanning the measurement space; a measuring probe for being brought into contact with the workpiece; a moving mechanism for moving the measuring probe; and a control unit for controlling a position of the measuring probe and operating the moving mechanism so as to measure positions of datum features of the workpiece.

The host computer may particularly be configured to execute a shape measurement program comprising one or more instructions causing the control unit to move the measuring probe.

The scanning device may for example be a smartphone or a tablet or another device comprising an imaging device, such as a video camera, and configured to provide a video stream.

The scanning device may be or comprise a 3D imaging device, such as a 3D camera, and/or comprise an infrared sensor for measuring a distance to objects in the measurement space.

The scanning device may further comprise sensors for determination of the orientation of the scanning device such as a gyroscope, an accelerometer and/or a magnetometer. One or more of said sensors may increase the accuracy of orientation and/or positioning determination of objects in the measurement space.

The movement mechanism is advantageously configured to move the measuring probe in a 3D space in which the workpiece is mounted on the table. The movement of the measuring probe may be, e.g., linearly in each one of X, Y and Z direction.

The shape measurement system may further comprise an augmented reality device for assisting a user in positioning the workpiece and/or in moving the measuring probe to generate a shape measurement program including a collision free movement path of the measuring probe.

In particular, a predetermined (or predeterminable) position and/or orientation of the workpiece may be shown to the user through the augmented reality device for assisting the user. Thus, the user may reposition the workpiece to obtain the correct position and/or orientation of the workpiece in the measurement space more easily and/or faster.

The present invention is further explained in detail by the following detailed description and the appended drawings, in which particular embodiments are illustrated by way of example, wherein the present invention is in no way limited by these particular embodiments. It should be understood that even though embodiments are separately described, single features thereof may be combined to additional embodiments.

### Brief description of the drawings

- Fig. 1: shows a flow diagram of an exemplary method generating a shape measurement program for measuring the shape of a workpiece;
- Fig. 2: shows a flow diagram of an exemplary method for conditioning a shape measurement of a workpiece;
- Fig. 3: shows a flow diagram of an exemplary method for defining a dimensional measurement equipment;
- Fig. 4: shows an exemplary shape measurement system for shape measurement of a workpiece;
- Fig. 5: shows an exemplary computing environment.

### Description of particular embodiments

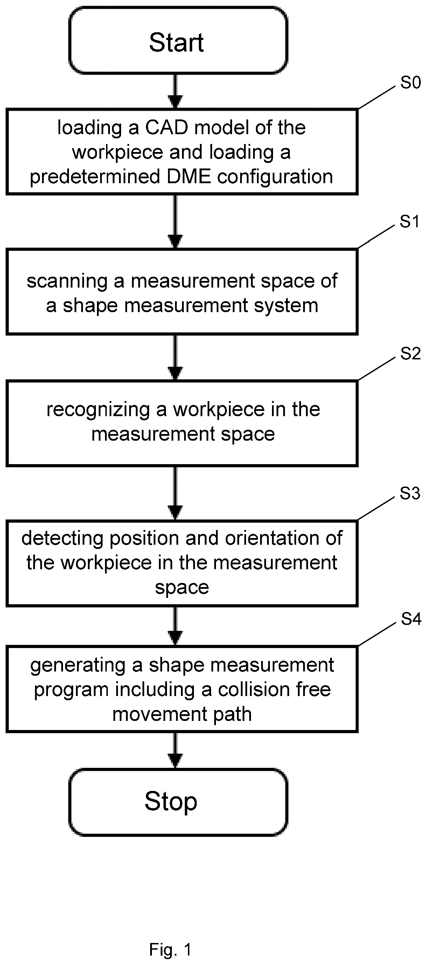

**Figure 1** shows an example of a flow diagram of a method for generating a shape measurement program for measuring the shape of a workpiece 12 with a shape measurement system 1.

In particular, the shape measurement system 1 may be or comprise a Form Measuring System (such as Contracer CV-2100N4, CV-2100M4, Formtracer Avant FTA-C3000 or Formtracer FTA-C4000 as commercialized by Mitutoyo Deutschland GmbH).

Further particularly, the shape measurement system 1 may be or comprise a Surface Roughness and/or Contour Measuring Instrument (such as Formtracer Avant FTA-D3000 or FTA-D4000 Series, Formtracer CS-3300, Formtracer Extreme SV-C4500CNC, Formtracer Extreme SV-C4500CNC Hybrid Type 1 or Formtracer Extreme CS-5000CNC / CS-H5000CNC as commercialized by Mitutoyo Deutschland GmbH).

Further particularly, the shape measurement system 1 may be or comprise a Form Measuring Instrument (such as Roundtest RA-10, Roundtest RA-120 or RA120P, RoundtestRA-1600, Roundtest RA-2200, Roundtest RA-H5200, Roundtest Extreme RA-2200 PLUS, Roundtest Extreme H5200 PLUS, Roundtest Extreme RA-6000CNC, Roundtracer Flash or Roundtracer Extreme RTX-0605-A as commercialized by Mitutoyo Deutschland GmbH).

Still further particularly, the shape measurement system 1 may be or comprise a Coordinate Measuring Machine (such as CRYSTA-Apex V500, 700 or 900 Series, CRYSTA-Apex V1200, 1600 or 2000 Series, CRYSTA-Apex EX1200R Series, STRATO-Active Series, STRATO-Apex 500, 700 or 900 Series, STRATO-Apex 1600 Series, LEGEX Series, MACH Ko-ga-me, MiSTAR 555, MACH-3A 653, MACH-V9106, STRATO Apex G, or CARBstrato Series as commercialized by Mitutoyo Deutschland GmbH).

These systems or apparatuses particularly allow to efficiently assess or measure or detect complex shapes, e.g. from radiused to cylindrical, from flat to compound curved, specifically including the surface roughness.

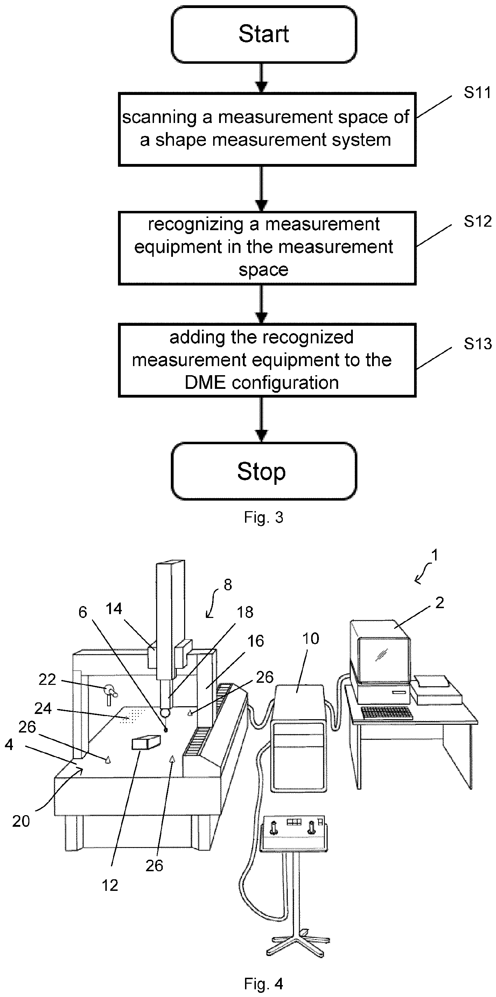

The method may include step S1: scanning a measurement space 20 of a shape measurement system 1, e.g., particularly a shape measurement system 1 as shown in **Figure 4****,** thereby obtaining scanning data.

The measurement space 20 of the shape measurement system 1 particularly represents a space or area or volume in which one or more workpieces 12 can be arranged and measured or detected by the shape measurement system 1. In many applications, a table 4 of the shape measurement system 1 particularly allows the workpiece 12 to be positioned within the measurement space 20 e.g. by being mounted thereto, as will be described hereinbelow. In other words, the measurement space 20 is a space allowing the arrangement of the workpiece(s) 12 for a corresponding shape measurement or determination by the shape measurement system 1 e.g. as exemplified herein (e.g. the Form Measuring System, the Surface Roughness and/or Contour Measuring Instrument, the Form Measuring Instrument and/or the Coordinate Measuring Machine, as mentioned herein).

The scanning is performed using a movable and/or mobile scanning device 22 comprising an imaging device, such as a camera. The scanning device 22 may for example be a smartphone or a tablet or another device particularly comprising an imager or imaging device (such as a video camera) and configured to provide images (such as a video stream) to a host computer 2 of the shape measurement system 1.

The method further may include step S2: recognizing a workpiece 12 in the measurement space 20 by analyzing the scanning data obtained from the scanning (S1). In particular, a host computer 2 of the measurement system 1 may compare stored information, such as pictures and/or 3D CAD models, of a workpiece with the scanning data in order to recognize the workpiece 12 to be measured.

The method further may include step S3: detecting a position and/or orientation of the workpiece 12 in the measurement space 20 after having recognized the workpiece 12. By analyzing the scanning data, a position and/or orientation of the workpiece 12 in the measurement space 20 is identified. The position and/or orientation may be defined relative to one or more features of the shape measurement system 1, e.g., a point of origin, and/or measurement equipment.

The method further may include step S4: generating a shape measurement program including a collision free movement path for a measuring probe 6 of the shape measurement system 1 for measuring the shape of the workpiece 12 in consideration of position and/or orientation of the workpiece 12.

In connection with step S4 - generating a shape measurement program including a collision free movement path for a measuring probe 6 of a shape measurement system 1, one or more instructions for causing movement of the measuring probe 6 to contact a plurality of contact points of the workpiece 12 may be generated taking into account the position and/or orientation of the workpiece 12 and the DME configuration.

Generating the shape measurement program including the collision free movement path for a measuring probe 6 advantageously further considers position and/or orientation of measurement equipment. This allows an improved definition of the movement path of the measuring probe, e.g., by defining collision avoidance zones where measurement equipment is positioned.

The generated shape measurement program is output and/or at least temporarily stored, e.g., on a non-volatile storage medium, in particular for being accessed by a shape measurement system 1 for shape measurement of a workpiece 12.

The method may further comprise loading of a 3D model of the workpiece 12 onto the host computer 2 of the shape measurement system 1 previously to step S1 and/or S2.

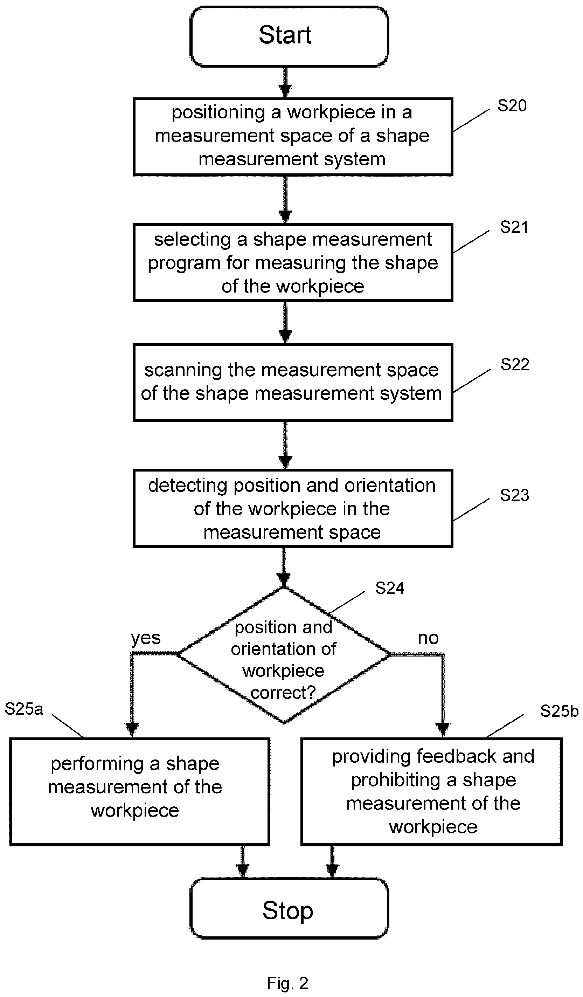

**Figure 2** shows an example of a flow diagram of a method for conditioning a shape measurement of a workpiece 12.

The method includes step S20: positioning a workpiece 12 to be measured in a measurement space 20 of a shape measurement system 1. For example, the workpiece 12 may be placed on a support means, e.g., a rack or a holder, which locks or temporarily fixes the workpiece 12 in position. The workpiece 12 and/or the support means may be directly or indirectly secured to the table 4 of the shape measurement system 1, e.g., by one or more screws, pins and/or hooks.

The method further may include step S21: selecting a shape measurement program for measuring the shape of the workpiece 12. The shape measurement program comprises shape measurement data and/or instructions for moving or displacing a measuring probe 6 to contact a plurality of contact points of the workpiece 12.

The shape measurement program may have been generated by the method shown in figure 1 and described above.

The method may further comprise loading of a 3D model of the workpiece 12 and/or a shape measurement program for the workpiece 12 onto the host computer 2 of the shape measurement system 1 previously to step S21.

The method further may include step S22: scanning the measurement space 20 of the shape measurement system 1 with a scanning device 22 to obtain scanning data. The scanning device 22 may be or comprise a mobile and/or movable imaging device (e.g. camera), which is preferably configured to provide a video stream and/or video feed of the measurement space 20 to the host computer 2.

The method further may include step S23: detecting a position and/or orientation of the workpiece 12 in the measurement space 20 by analyzing the scanning data. A location and an orientation of the workpiece 12 in the measurement space 20 is detected by analyzing the video stream/feed.

The method further may include step S24: determining whether the position and/or orientation of the workpiece 12 is correct. The host computer 2 is configured to compare the detected position and/or orientation of the workpiece 12 with a predetermined or predeterminable position and/or orientation and evaluates whether the workpiece 12 is placed correctly or incorrectly. A predetermined or predeterminable tolerance of the position and/or orientation may be taken into account.

Depending on the determination of the position and/or orientation of the workpiece 12, the method subsequently may include either:
S25a - performing a shape measurement of the workpiece 12 if the detected position and/or orientation of the workpiece 12 is correct; or
S25b - providing feedback and/or prohibiting performing a shape measurement of the workpiece 12 if the detected position and/or orientation of the workpiece 12 is not correct.

Regarding step S25a - performing a shape measurement of the workpiece 12 if the detected position and/or orientation of the workpiece 12 is correct: The shape measurement of the workpiece 12 may cause moving or displacing a measuring probe 6 of the shape measurement system 1 to contact a plurality of contact points of the workpiece 12 and capturing the position of said contact points in the measurement space 20.

Regarding step 25b - providing feedback and/or prohibiting performing a shape measurement of the workpiece 12 if the detected position and/or orientation of the workpiece 12 is not correct: an indication that the workpiece 12 is not positioned and/or oriented correctly may be generated and provided to the user. As long as the position and/or orientation is not corrected, the shape measurement of the workpiece 12 may not be started.

Optionally, instructions on how the workpiece 12 is to be moved in the measurement space 20 to obtain the correct position and/or orientation may be provided to the user for assisting the user to place the workpiece 12 correctly. This may, e.g., include a suggestion for translational and/or rotational movement of the workpiece 12 and/or providing a holder and/or fixture for supporting the workpiece 12 and/or instructions for actuating a rotary table on which the workpiece 12 may be positioned.

Step S24 may be repeated one or more times, particularly until the correct position and/or orientation of the workpiece 12 is obtained and the shape measurement of the workpiece 12 is performed to a sufficient extent.

**Figure 3** shows an example of a flow diagram of a method for defining a dimensional measurement equipment, DME, configuration of a shape measurement system 1.

The method may include step S11: scanning a measurement space 20 of a shape measurement system 1 with a scanning device 22 comprising an imaging device, such as a camera, which provides scanning data, e.g., in the form of a video stream/feed. The video stream/feed provided to a computing device and/or host computer 2, which processes the video stream/feed for identifying measurement equipment.

The method further may include step S12: recognizing a measurement equipment in the measurement space 20 by analyzing the image(s) or video stream. An identified measurement equipment is compared with known measurement equipment in a measurement equipment library.

For example, a code, such as a barcode or a QR code, provided at the measurement equipment may be identified by analyzing the image(s) or video stream so that the measurement equipment may be recognized. Alternatively or in addition, the measurement equipment in the measurement space 20 may be recognized by visual comparison with stored pictures and/or models of measurement equipment. Furthermore, position and/or orientation and/or mode of the measurement equipment may be determined by analyzing the image(s) or video stream.

The method further may include step S13: adding the recognized measurement equipment to the DME configuration. Type and, optionally, position and/or orientation, of the measurement equipment may be added to the DME configuration.

Identified unknown objects may be added to the library, e.g., for subsequent definition by a user so that it may be recognized in future scans.

Steps S11 to S13 may be repeated one or more times, particularly until all or a sufficient number of measurement equipments has been recognized and added to the DME configuration.

The method for defining a DME configuration may also be comprised by a method for generating a shape measurement program for measuring the shape of a workpiece 12, e.g., as shown in figure 1 and described above, and/or a method for a shape measurement of a workpiece 12, e.g., as shown in figure 2 and described above.

**Figure 4** shows an exemplary shape measurement system 1 for shape measurement of a workpiece 12, which may be configured to perform at least some of the steps of the methods described herein.

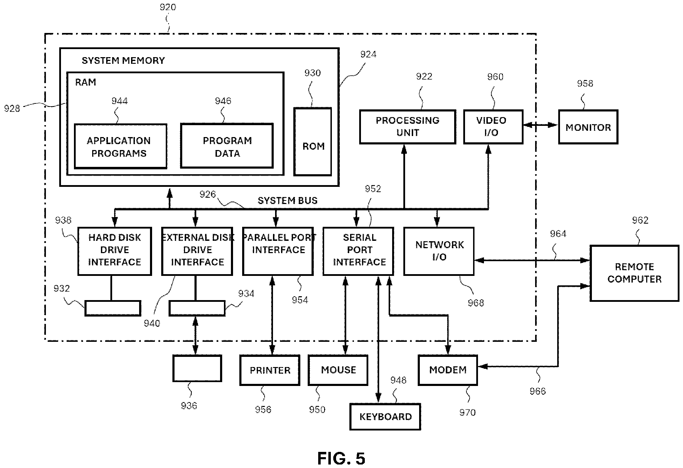

Specifically, the shape measurement system 1 comprises a host computer 2 for carrying out said steps. Further exemplary details are explained below in connection with Figure 5.

The shape measurement system 1 may comprise a table 4 for supporting a workpiece 12 and/or providing a mounting base for measurement equipment.

The shape measurement system 1 of Fig. 4 includes a moving mechanism 8 and a control unit 10 configured to control the moving mechanism 8 by being operated by the host computer 2.

The movement mechanism 8 includes a Y slider 16, an X slider 14 and a Z mover 18. The Y slider 16 is provided to be slidable on the table 4 in a Y direction. The X slider 14 slides along a beam of the Y slider 16 in an X direction. The Z mover 18 is fixed to the X slider 14. The Z mover 18 moves in a Z direction by moving up away from the table 4 or down towards the table 4.

A measuring probe 6 is positioned at the top of the Z mover 18 and configured to contact the workpiece 12 to perform shape measurements of the workpiece 12.

The Y slider 16, the X slider 14, and the Z 18 mover may each be attached with one or more drive motors and encoders. The drive of each drive motor may be controlled by a drive control signal from the control unit 10. Each encoder detects a moving amount of the Y slider 16, the X slider 14 or the Z mover 18 and outputs a detection value to the control unit 10 and/or the host computer 2.

The shape measurement system 1 further comprises a measurement space 20, which may be defined by a movement space of the measuring probe 6.

The shape measurement system 1 further comprises a scanning device 22. The scanning device 22 may for example be or comprise a video imaging device, such as a video camera. The scanning device 22 may be a smartphone and/or similar handheld device for example. The scanning device 22 may be connected to the host computer 2 by wire or wireless.

The scanning device 22 is advantageously moved around and/or within the measurement space 20. From the scanning data, e.g., including a video stream/feed, the workpiece 12 and measurement equipment in the measurement space 20 may be detected.

The scanning device 22 may comprise additional sensors, such as an infrared sensor for measuring a distance between the scanning device 22 and the workpiece 12 and/or measurement equipment. Alternatively or in addition, the scanning device 22 may comprise a gyroscope and/or an accelerometer for improved detection of its position and/or orientation.

As shown in figure 3, measurement equipment is provided on the table 4 in the form of measurement markers 26 and mounting holes 24. Said measurement equipment may improve detecting the position and/or orientation of the workpiece 12 and/or other measurement equipment in that they provide fixed reference points in the measurement space 20.

The measurement markers 26 are particularly advantageous as they provide a fixed coordinate system, in particular for the plane of the table 4.

**Figure 5** shows an exemplary system for implementing the invention including a general-purpose computing device in the form of a conventional computing environment 920 (e.g. a personal computer) e.g. for embodying the above-described control unit 10 and/or the host computer 2. The conventional computing environment includes at least one processing unit 922, a system memory 924, and a system bus 926. The system bus couples various system components including the system memory 924 to the at least one processing unit 922.

The at least one processing unit 922 may comprise perform arithmetic, logic and/or control operations by accessing the system memory 924. The at least one processing unit 922 may comprise a central processing unit (CPU) and a graphics processing unit (GPU), which is designed for digital image processing but is also suitable to perform non-graphic calculations. A CPU may be optimized for sequential processing, while a GPU may be optimized for parallel processing.

The system memory 924 may store information and/or instructions for use in combination with the at least one processing unit 922. The system memory 924 may include volatile and non-volatile memory, such as a random access memory (RAM) 928 and a read only memory (ROM) 930.

A basic input/output system (BIOS) containing the basic routines that helps to transfer information between elements within the personal computer 920, such as during start-up, may be stored in the ROM 930. The system bus 926 may be any of several types of bus structures including a memory bus or memory controller, a peripheral bus, and a local bus using any of a variety of bus architectures.

The personal computer 920 may further include a hard disk drive 932 for reading from and writing to a hard disk (not shown), and an external disk drive 934 for reading from or writing to a removable disk 936. The removable disk may be a magnetic disk for a magnetic disk driver or an optical disk such as a CD ROM for an optical disk drive. The hard disk drive 932 and the external disk drive 934 are connected to the system bus 926 by a hard disk drive interface 938 and an external disk drive interface 940, respectively. The drives and their associated computer-readable media provide nonvolatile storage of computer readable instructions, data structures, program modules and other data for the personal computer 920. The data structures may include relevant data for the implementation of the method, as described above. The relevant data may be organized in a database, for example a relational database management system or an object-oriented database management system.

Although the exemplary environment described herein employs a hard disk (not shown) and an external disk 936, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk 936, ROM 930 or RAM 928, including an operating system (not shown), one or more application programs 944, other program modules (not shown), and program data 946. The application programs may include at least a part of the functionality as depicted in figures 1 to 3.

A user may enter commands and information, as discussed below, into the personal computer 920 through input devices such as keyboard 948 and mouse 950. Other input devices (not shown) may include a microphone (or other sensors), joystick, game pad, scanner, or the like. These and other input devices may be connected to the at least one processing unit 922 through a serial port interface 952 that is coupled to the system bus 926, or may be collected by other interfaces, such as a parallel port interface 954, game port or a universal serial bus (USB). Further, information may be printed using printer 956. The printer 956, and other parallel input/output devices may be connected to the at least one processing unit 922 through parallel port interface 954. A monitor 958 or other type of display device is also connected to the system bus 926 via an interface, such as a video input/output 960. In addition to the monitor, computing environment 920 may include other peripheral output devices (not shown), such as speakers or other audible output.

The computing environment 920 may communicate with other electronic devices such as a computer, telephone (wired or wireless), personal digital assistant, television, or the like.

The computing environment 920 may specifically communicate with the movable and/or mobile scanning device 22 comprising an imaging device, such as a camera (e.g. a smartphone, table or the like mobile device having imaging properties) to obtain the scanning data in order to perform the scanning S1, S22, S22 of the measurement space 20 of the shape measurement system 1, described herein.

To communicate, the computer environment 920 may operate in a networked environment using connections to one or more electronic devices (e.g. the movable and/or mobile scanning device 22). Figure 5 exemplarily depicts the computer environment networked with remote computer 962. The remote computer 962 may be another computing environment such as a server, a router, a network PC, a peer device or other common network node, and may include many or all of the elements described above relative to the computing environment 920. The logical connections depicted in figure 5 include a local area network (LAN) 964 and a wide area network (WAN) 966. Such networking environments are commonplace in offices, enterprise-wide computer networks, intranets and the Internet and may particularly be encrypted.

When used in a LAN networking environment, the computing environment 920 may be connected to the LAN 964 through a network I/O 968. When used in a WAN networking environment, the computing environment 920 may include a modem 970 or other means for establishing communications over the WAN 966. The modem 970, which may be internal or external to computing environment 920, is connected to the system bus 926 via the serial port interface 952. In a networked environment, program modules depicted relative to the computing environment 920, or portions thereof, may be stored in a remote memory storage device resident on or accessible to remote computer 962. Furthermore other data relevant to the method(s) as described above may be resident on or accessible via the remote computer 962. It will be appreciated that the network connections shown are exemplary and other means of establishing a communications link between the electronic devices may be used.

The above-described computing system represents an example of the type of computing system that may be used to implement the described method for generating a shape measurement program for measuring the shape of a workpiece 12, the described method for conditioning a shape measurement of a workpiece 12, the described method for defining a dimensional measurement equipment, DME, configuration of a shape measurement system 1 and/or the described method generating a shape measurement program for measuring the shape of a workpiece 12.

### List of Reference Numerals

- 1: shape measurement system
- 2: host computer
- 4: table
- 6: measuring probe
- 8: moving mechanism
- 10: control unit
- 12: workpiece
- 14: X slider
- 16: Y slider
- 18: Z mover
- 20: measurement space
- 22: scanning device
- 24: mounting holes
- 26: measurement marker
- 920: computing environment
- 922: processing unit
- 924: system memory
- 926: system bus
- 928: random access memory (RAM)
- 930: read only memory (ROM)
- 932: hard disk drive
- 934: external disk drive
- 936: external disk
- 938: hard disk drive interface
- 940: external disk drive interface
- 948: keyboard
- 950: mouse
- 952: serial port interface
- 954: parallel port interface
- 956: printer
- 958: monitor
- 960: video input/output
- 962: remote computer
- 964: local area network (LAN)
- 966: wide area network (WAN)
- 968: network I/O

## Claims

1. Method for generating a shape measurement program for measuring the shape of a workpiece (12), the method comprising the steps:
scanning (S1, S11, S22) a measurement space (20) of a shape measurement system (1) with a movable and/or mobile scanning device (22) comprising an imaging device to obtain scanning data;
recognizing (S2) at least one workpiece (12) in the measurement space (20) by analyzing the scanning data;
detecting (S3) a position and/or orientation of the at least one workpiece (12) in the measurement space (20); and
generating (S4) a shape measurement program including a collision free movement path for a measuring probe (6) of the shape measurement system (1) for measuring the shape of the at least one workpiece (12).

2. The method of claim 1, further comprising the steps:
identifying a dimensional measurement equipment, DME, configuration; and
if the detected DME configuration does not correspond to a predetermined DME configuration, prohibiting generating (S4) the shape measurement program for measuring the shape of the at least one workpiece (12).

3. The method of claim 1 or 2, wherein recognizing (S2) at least one workpiece (12) in the measurement space (20) includes comparing at least part of the workpiece (12) (and/or a property thereof) identified in the measurement space (20) with a loaded (CAD) model of the workpiece (12) and/or known workpieces (12) in a workpiece library.

4. The method of any one of the preceding claims, further comprising the step:
adding one or more collision avoidance zones automatically and/or manually to be considered in generating the shape measurement program, in particular the collision free movement path of the measuring probe.

5. Method for conditioning a shape measurement of a workpiece (12), the method comprising the steps:
positioning (S20) a workpiece (12) in a measurement space (20) of a shape measurement system (1);
selecting (S21) a shape measurement program for measuring the shape of the workpiece (12);
scanning (S1, S11, S22) the measurement space (20) of the shape measurement system (1) with a movable and/or mobile scanning device (22) comprising an imaging device to obtain scanning data;
detecting (S23) a position and/or orientation of the workpiece (12) in the measurement space (20) by analyzing the scanning data;
determining (S24) whether the position and/or orientation of the workpiece (12) is correct; and
performing (S25a) a shape measurement of the workpiece (12) if the detected position and/or orientation of the workpiece (12) is correct; or
providing (S25b) feedback and/or prohibiting performing (S25a) a shape measurement of the workpiece (12) if the detected position and/or orientation of the workpiece (12) is not correct.

6. The method of claim 5, wherein providing (S25b) feedback if the detected position and/or orientation of the workpiece (12) is not correct includes providing one or more instructions on how the workpiece (12) is to be moved in the measurement space (20) to obtain the correct position and/or orientation.

7. The method of claim 5 or 6, further comprising the steps:
identifying (S23-1) a dimensional measurement equipment, DME, configuration; and
prohibiting performing (S25a) a shape measurement of the workpiece (12) if the detected DME configuration does not correspond to a predetermined DME configuration.

8. The method of any one of claims 5 to 7, wherein performing (S25a) a shape measurement of the workpiece (12) if the detected position and/or orientation of the workpiece (12) is correct includes executing a shape measurement program generated using the method of any one of claims 1 to 3.

9. The method of any one of the preceding claims, further comprising the step:
loading a model of the workpiece (12); and/or
loading a predetermined dimensional measurement equipment, DME, configuration of the shape measurement system (1).

10. Method for defining a dimensional measurement equipment, DME, configuration of a shape measurement system (1), the method comprising the steps:
scanning (S1, S11, S22) a measurement space (20) of a shape measurement system (1) with a movable and/or mobile scanning device (22) comprising an imaging device to obtain scanning data;
recognizing (S12) a measurement equipment in the measurement space (20) by analyzing the scanning data; and
adding (S13) the recognized measurement equipment to the DME configuration.

11. The method of claim 10, wherein recognizing (S12) a measurement equipment in the measurement space (20) includes comparing a measurement equipment detected in the measurement space (20) with known measurement equipment in a measurement equipment library.

12. Method for generating a shape measurement program for measuring the shape of a workpiece (12), the method comprising the steps:
scanning (S1, S11, S22) a measurement space (20) of a shape measurement system (1) with a movable and/or mobile scanning device (22) comprising an imaging device to obtain scanning data;
recognizing (S2) at least one workpiece (12) in the measurement space (20) by analyzing the scanning data;
detecting (S3) a position and/or orientation of the at least one workpiece (12) in the measurement space (20);
recognizing (S12) a measurement equipment in the measurement space (20) by analyzing the scanning data;
adding (S13) the recognized measurement equipment to the DME configuration; and
generating (S4) a shape measurement program including a collision free movement path for a measuring probe (6) of the shape measurement system (1) for measuring the shape of the workpiece (12).

13. Computer-readable program comprising instructions which, when loaded and executed on a suitable system, cause the system to carry out the steps of the method according to any one of the preceding claims.

14. Shape measurement system (1) comprising a host computer configured to carry out the method according to any one of claims 1 to 12, the shape measurement system (1) further comprising:
a table (4) for mounting a workpiece (12) in a measurement space (20) of the shape measurement system (1);
a scanning device (22) for scanning the measurement space (20);
a measuring probe (6) for being brought into contact with the workpiece (12);
a moving mechanism (8) for moving the measuring probe (6); and
a control unit (10) for controlling a position of the measuring probe (6) and operating the moving mechanism (8) so as to perform shape measurement of the workpiece (12).

15. The shape measurement system (1) of claim 14, further comprising an augmented reality device for assisting a user in positioning the workpiece and/or in moving the measuring probe (6).
